Europäisches Patentamt

European Patent Office

Office européen des brevets

(11) Veröffentlichungsnummer: **0 004 250
B1**

(12) **EUROPÄISCHE PATENTSCHRIFT**

(12)

(45) Veröffentlichungstag der Patentschrift:
**27.04.83**

(21) Anmeldenummer: **79810017.8**

(22) Anmeldetag: **23.02.79**

(51) Int. Cl.³: **F 16 B  13/00**

(54) **Dübel zur Befestigung eines Schraubelementes in einem Loch eines Bauteiles.**

(30) Priorität: **03.03.78  CH 2352/78**

(43) Veröffentlichungstag der Anmeldung:
**19.09.79 Patentblatt 79/19**

(45) Bekanntmachung des Hinweises auf die Patenterteilung:
**27.04.83 Patentblatt 83/17**

(84) Benannte Vertragsstaaten:
**BE FR IT NL**

(56) Entgegenhaltungen:
**AT-B- 294 396
DE-A-2 100 379
FR-A- 756 453
FR-A- 890 369
FR-A-2 194 251
FR-A-2 315 568
US-A-1 392 095
US-A-1 402 389
US-A-1 718 438
US-A-1 800 968
US-A-2 788 571**

(73) Patentinhaber: **Murbach, Jules, Lindengut 15,
CH-8750 Glarus (CH)**
Patentinhaber: **Stüssi, Karl, Im Büel 15, CH-8750 Glarus
(CH)**

(72) Erfinder: **Murbach, Jules, Lindengut 15, CH-8750 Glarus
(CH)**

(74) Vertreter: **Schmauder, Klaus Dieter et al, c/o Schmauder
& Wann Patentanwaltsbüro Nidelbadstrasse 75,
CH-8038 Zürich (CH)**

Dübel zur Befestigung eines Schraubenelementes in einem Loch eines Bauteiles

Die Erfindung betrifft einen Dübel der im Oberbegriff des Anspruches 1 genannten Art.

Aus der FR-A-890 369 ist ein Dübel der genannten Art bekannt, wobei der Spreizkörper in seiner Längsausdehnung ganz oder teilweise mit einer Hülle aus Gips, Leim, Kautschuk oder dergleichen umgeben ist. Der Dübel dient zur Befestigung in einem Loch eines Bauteiles aus porösem, wenig widerstandsfähigem Material, wobei die Hülle beim Spreizen des Spreizkörpers während des Anziehens eines Schraubelementes in die umgebende Wandung des Bauteil-Loches eindringen soll. Die zuvor mit Wasser oder einem anderen Lösungsmittel benutzte Hülle des Dübels verbindet sich mit der Wandung des Bauteil-Loches und bildet nach dem Aushärten eine unlösbare Verbindung mit dem Bauteil. Durch das Aushärten des Materials der Hülle entsteht eine starre Verbindung zwischen dem Spreizkörper und dem Bauteil, die eine besonders gute Körperschall-Übertragung von einem Schraubelement in den Bauteil bewirkt.

Aus den GB-A-1 402 389 und GB-A-1 392 095 sind nietenartige Dübel mit schalldämmenden Eigenschaften bekannt, die an einem Ende einer Hülle aus schwingungsdämpfendem Material, wie Kautschuk, Mutterelemente enthalten. Beim Einschrauben eines Schraubelementes wird die Hülle in Achsrichtung gestaucht, wodurch sich die Hülle radial nach aussen beult und auf der Rückseite von flachen Bauteilen anlegt. Der Dübel ist deshalb in aller erster Linie zum Verbinden dünnwandiger Bauteile und für Hohlkörper geeignet. In Bohrlöchern kann der Dübel nur untergeordnete Aufgaben erfüllen, da sich keine brauchbaren Auszugswerte erzielen lassen. Ausserdem ist der nietenartige Dübel nur für Maschinenschrauben und nicht für Holzschrauben geeignet.

Der Erfindung liegt nun die Aufgabe zu Grunde, einen Dübel zu schaffen, der normal wie jeder Dübel verwendbar ist, d.h. die Auszugswerte normaler Dübel erreicht und dennoch die Übertragung von Körperschall verhindert, und der vorzugsweise die Verwendung von Holzschrauben ermöglicht.

Diese Aufgabe wird durch die kennzeichnenden Merkmale des Anspruches 1 gelöst. Nur durch die Verwendung des Spreizkörpers, beispielsweise gemäss Anspruch 6 oder vorzugsweise gemäss Anspruch 7 weitergebildet, der mit Ausnahme der Aufnahme-Öffnung mindestens annähernd vollständig von der Hülle aus einem Kautschuk mit einer Härte von 60 bis 75, vorzugsweise 65 bis 70 Shore, umgeben ist, werden die erforderlichen hohen Auszugswerte erreicht, wobei bei einem solchen Dübel auch Holzschrauben zum Einsatz kommen können. Dennoch werden bei einem solchen Dübel in überraschender Weise schwingungsdämpfende Eigenschaften erzielt, wobei die Abschwächung der Körperschallübertragung beispielsweise 10 bis 16dB beträgt.

Vorteilhafte Ausgestaltungen der Erfindung sind in den Ansprüchen 2 bis 7 umschrieben.

Die schwingungsdämpfende Wirkung des Dübels lässt sich gemäss Anspruch 2 verbessern.

Wenn der Spreizteil des Dübels im mittleren Teil des Spreizkörpers liegt (Anspruch 6), so kann die Hülle an der Einsetzseite geschlossen sein. Liegt der Spreizteil jedoch an der Einsetzseite des Spreizkörpers, so ist eine Ausgestaltung nach Anspruch 3 vorteilhaft, da diese Ausgestaltung die Funktion des Spreizteiles am wenigsten behindert.

Die Verbindung zwischen dem Spreizkörper und der Hülle kann durch die Massnahmen des Anspruches 4 verbessert werden. Dabei können die Ansätze einseitig abgeschrägt ausgestaltet sein, so dass beispielsweise ein nachträgliches Einfügen eines Spreizkörpers in die Hülle möglich ist, jedoch ein Herausziehen verhindert wird. Besonders gute Eigenschaften gegen Verdrehen von Hülle und Spreizkörper zeitigt eine Ausbildung des Dübels nach Anspruch 5.

Eine Ausgestaltung des Dübels nach Anspruch 6 ist insbesondere für Schraubelemente mit einem Maschinengewinde geeignet. Für Schraubelemente mit einem Holzgewinde eignet sich insbesondere die Ausgestaltung nach Anspruch 7.

Ausführungsbeispiele des erfindungsgemässen Dübels werden nachfolgend anhand der Zeichnungen beschrieben, in denen der Dübel jeweils im Längsschnitt dargestellt ist, wobei jeweils die untere Hälfte der Figur den Spreizkörper im Längsschnitt zeigt. Es stellen dar:

Figur 1: einen Dübel mit einem Spreizkörper, dessen Spreizteil im mittleren Bereich liegt; und

Figur 2: einen Dübel mit einem Spreizkörper mit Spreizzungen.

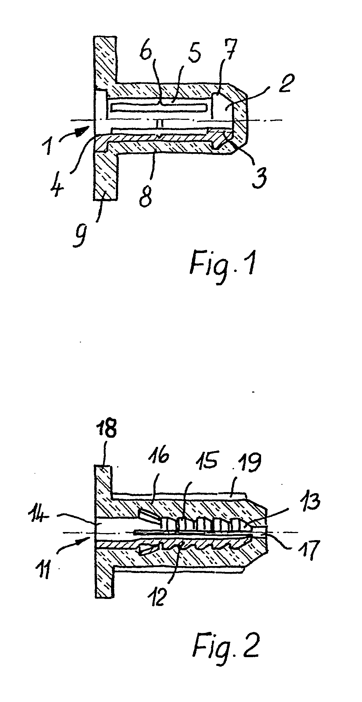

Der in Figur 1 dargestellte Dübel enthält einen Spreizkörper 1 mit einer Öffnung zur Aufnahme eines nicht dargestellten Schraubelementes. Auf der Einsetzseite weist der Spreizkörper einen Gewindeteil 2 mit einem Innengewinde 3 auf. Auf der Einschraubseite besitzt der Spreizkörper einen Führungsteil 4 für ein aufzunehmendes Schraubelement. Zwischen dem Führungsteil 4 und dem Gewindeteil 2 sind vier am Umfang verteilte Spreizstege 5 angeordnet, die jeweils Knickrillen 6 enthalten. Der Gewindeteil 2 ist überdies mit einem Ansatz 7 ausgestattet, um eine formschlüssige Verbindung zwischen dem Spreizkörper 1 und der ihn umgebenden Hülle 8 sicherzustellen.

Die Hülle 8 ist auf der Einsetzseite des Dübels geschlossen und weist auf der Einschraubseite einen radial nach aussen stehenden Flansch 9 auf, der als Zwischenlage zwischen einem zu befestigenden Konstruktionselement und einem Bauteil dient, in dem das Loch angeordnet ist, in welches der Dübel eingesetzt ist.

Der Spreizkörper 1 kann aus Kunststoff bestehen, vorzugsweise ist er jedoch aus Metall, beispielsweise Eisen oder Messing gefertigt, und dient zur Befestigung von Schraubelementen mit einem Maschinengewinde. Durch Einschrauben eines solchen Schraubelementes und Festziehen desselben wird der Gewindeteil 2 gegen den Führungsteil 4 bewegt und deren Abstand verkürzt, wodurch sich die Spreizstege 5 unter Knicken an den Knickrillen 6 nach aussen spreizen und in einem Loch eines Bauteiles festklemmen.

Der Dübel der Figur 2 enthält einen Spreizkörper 11 mit einem Gewindeteil 12, der jedoch kein eingeschnittenes Gewinde trägt, sondern in den sich das Holzgewinde eines Schraubelementes eingräbt. Der Gewindeteil dient gleichzeitig als Spreizteil und weist hierzu zwei Spreizzungen 13 auf, die einstückig mit dem Führungsteil 14 an der Einschraubseite des Spreizkörpers verbunden sind. Der Spreizkörper enthält mehrere auf der Aussenseite der Spreizzungen 13 in Form von Rippen angeordnete Ansätze 15, die eine formschlüssige Verbindung mit der den Körper umgebenden Hülle 16 sicherstellen.

Die Hülle 16 umgibt den Spreizkörper 11 und ist an der Einsetzseite mit einer axialen Durchgangsöffnung 17 versehen, wodurch ein Spreizen der Spreizzungen 13 erleichtert wird. An der Einschraubseite ist die Hülle 16 mit einem radial vorstehenden Flansch 18 ausgestattet. Auf der Aussenseite kann die Hülle mit Längsrippen 19 versehen sein, die ein Drehen des Dübels in einer Bohrung erschweren.

Der Spreizkörper 11 besteht aus Kunststoff und dient in erster Linie zur Befestigung von Schraubelementen mit einem Holzgewinde.

## Patentansprüche

1. Dübel zur Befestigung eines Schraubelementes in einem Loch eines Bauteiles, mit einem Spreizkörper, der eine Öffnung zur Aufnahme des Schraubelementes sowie einen beim Einschrauben bzw. Anziehen des Schraubelementes radial wirkenden Spreizteil aufweist, sowie mit einer Hülle mit vom Spreizkörper abweichenden physikalischen Eigenschaften, dadurch gekennzeichnet, dass die Hülle (8, 16) den Spreizkörper (1, 11) mit Ausnahme der Aufnahme-Öffnung mindestens annähernd vollständig umgibt und aus einem Kautschuk mit einer Härte von 60 bis 75, vorzugsweise 65 bis 70 Shore, besteht.

2. Dübel nach Anspruch 1, dadurch gekennzeichnet, dass die Hülle (8, 16) an der Seite der Aufnahme-Öffnung einen radialen Flansch (9, 18) aufweist.

3. Dübel nach Anspruch 1 oder 2, dadurch gekennzeichnet, dass die Hülle (16) an der Einsetzseite eine axiale Durchgangsöffnung (17) aufweist.

4. Dübel nach mindestens einem der Ansprüche 1 bis 3, dadurch gekennzeichnet, dass der Spreizkörper (1, 11) in die Hülle (8, 16) eingreifende Ansätze (7, 15) aufweist.

5. Dübel nach mindestens einem der Ansprüche 1 bis 4, dadurch gekennzeichnet, dass die Hülle (8, 16) auf den Spreizkörper (1, 11) aufgeformt ist.

6. Dübel nach mindestens einem der Ansprüche 1 bis 5, dadurch gekennzeichnet, dass der Spreizkörper (1) auf der Einsetzseite einen Gewindeteil (2) aufweist, der über Spreizstege (5) mit einem Führungsteil (4) auf der Einschraubseite verbunden ist, wobei die Spreizstege (5) vorzugsweise Knickrillen (6) aufweisen.

7. Dübel nach mindestens einem der Ansprüche 1 bis 5, dadurch gekennzeichnet, dass der Spreizkörper (11) auf der Einschraubseite einen Führungsteil (14) aufweist, an den sich Spreizzungen (13) anschliessen.

## Claims

1. A plug for fixing a screw element in a hole in a structural member, comprising a spreading body having an opening for receiving the screw element and a spreading portion being arranged to expand radially when the screw element is screwed in or tightened, and a covering with physical properties differing from those of the spreading body, characterized in that the covering (8, 16) substantially completely surrounds the spreading body (1, 11) except for the receiving-opening and consists of rubber having a hardness of 60 to 75 Shore, preferably 65 to 70 Shore.

2. A plug according to claim 1, characterized in that the covering (8, 16) comprises a radial flange (9, 18) at the same side as the reveiving-opening opens.

3. A plug according to claim 1 or 2, characterized in that the covering (16) comprises an axial continuous opening (17) at the insertion end.

4. A plug according to at least one of the claims 1 to 3, characterized in that the spreading body (1, 11) comprises projections (7, 15) engaging in the covering (8, 16).

5. A plug according to at least one of the claims 1 to 4, characterized in that the covering (8, 16) is moulded on the spreading body (1, 11).

6. A plug according to at least one of the claims 1 to 5, characterized in that the spreading body (1) comprises a threaded portion (2) at the insertion end, said threaded portion being connected via spreading webs (5) to a guide portion (4) at the end with the receiving opening whereby the spreading webs (5) are preferably provided with transverse grooves (6).

7. A plug according to at least one of the claims 1 to 5, characterized in that the spreading body (11) comprises a guide portion (14) at the end with the receiving opening, said guide portion being adjoined by spreading tongues (13).

## Revendications

1. Cheville pour la fixation d'un élément à vis dans un perçage d'une pièce de construction, avec un corps expansible qui présente une ouverture pour la réception de l'élément à vis, ainsi qu'une partie expansible agissant radialement lors de l'introduction et du vissage de l'élément à vis, ainsi qu'une enveloppe possédant des propriétés physiques différentes de celles du corps expansible, cheville caractérisée en ce que l'enveloppe (8, 16) entoure, au moins approximativement, entièrement le corps expansible (1, 11) à l'exception de l'ouverture de réception, et consiste en un caoutchouc ayant une dureté Shore de 60 à 75, de préférence comprise entre 65 et 70.

2. Cheville suivant la revendication 1, caractérisée en ce que l'enveloppe (8, 16) présente, sur le côté de l'ouverture de réception, un flasque ou collerette radiale (9, 18).

3. Cheville suivant l'une des revendications 1 ou 2, caractérisée en ce que l'enveloppe (16) présente, sur l'extrémité d'engagement, une ouverture axiale de traversée (17).

4. Cheville suivant au moins l'une des revendications 1 à 3, caractérisée en ce que le corps expansible (1, 11) présente un des appendices (7, 15) qui s'engagent dans l'enveloppe (8, 16).

5. Cheville suivant au moins l'une quelconque des revendications 1 à 4, caractérisée en ce que l'enveloppe (8, 16) est adaptée dans sa forme sur le corps expansible (1, 11).

6. Cheville suivant au moins l'une quelconque des revendications 1 à 5, caractérisée en ce que le corps expansible (1) présente sur son côté d'introduction une partie filetée (2) qui est reliée par des barrettes expansibles (5) à une partie de guidage (4) sur le côté du vissage, ces barrettes expansibles (5) présentant, par exemple, des rainures (6) favorisant une déformation en coude.

7. Cheville suivant au moins l'une quelconque des revendications 1 à 5, caractérisée en ce que le corps expansible (11) présente, sur le côté du vissage, une partie de guidage (14) à laquelle se raccordent des languettes expansibles (13).

Fig. 1

Fig. 2